Europäisches Patentamt

European Patent Office

Office européen des brevets

(11) Numéro de publication : **0 013 343**
**B1**

(12) **FASCICULE DE BREVET EUROPÉEN**

(45) Date de publication du fascicule du brevet :
28.04.82

(21) Numéro de dépôt : **79104884.6**

(22) Date de dépôt : **04.12.79**

(51) Int. Cl.³ : **H 04 L 25/03**, H 04 L 7/10

(54) **Procédé et dispositif pour détecter une séquence pseudo-aléatoire de changements de phase de 0 degré et 180 degrés de la porteuse dans un récepteur de données.**

(30) Priorité : **20.12.78 FR 7836580**

(43) Date de publication de la demande :
**23.07.80 (Bulletin 80/15)**

(45) Mention de la délivrance du brevet :
**28.04.82 Bulletin 82/17**

(84) Etats contractants désignés :
**DE FR GB**

(56) Documents cités :
**FR - A - 2 352 456**
**GB - A - 1 521 029**

(73) Titulaire : **International Business Machines Corporation**

**Armonk, N.Y. 10504 (US)**

(72) Inventeur : **Bigo, Firmin**
**Villa "La Passacaille"**
**F-06610 La Gaude (FR)**
Inventeur : **Caron, François**
**Villa 21 Domaine de la Quiétude Chemin Caucours**
**F-06800 Cagnes/Mer (FR)**

(74) Mandataire : **de Pena, Alain**
**COMPAGNIE IBM FRANCE Departement de Propriété Industrielle**
**F-06610 La Gaude (FR)**

Imprimerie Jouve, 18, rue St-Denis, 75001 Paris, France

## Procédé et dispositif pour détecter une séquence pseudo-aléatoire de changements de phase de 0° et 180° de la porteuse dans un récepteur de données

### Description

### Domaine Technique

La présente invention concerne les détecteurs de séquence particulière utilisés dans les récepteurs des systèmes de transmission de données qui utilisent une modulation à double bande latérale-porteuses en quadrature, et dans lesquels, avant la transmission des données, on émet une première séquence constituée par une onde porteuse dont la phase fait l'objet d'inversions successives de 180° à la cadence de signalisation, suivie par une seconde séquence constituée par la même onde porteuse dont la phase fait l'objet de changements pseudo-aléatoires de 0° et de 180°. L'invention concerne plus particulièrement un procédé et un dispositif pour détecter l'instant où le début de ladite seconde séquence est reçu. La présente invention est particulièrement utile pour détecter la séquence d'initialisation d'égaliseur recommandée par les avis V27 bis et V27 ter du CCITT.

Le terme modulation à double bande latérale-porteuses en quadrature (DSB-QC) désigne la classe de techniques de modulation qui comprend la modulation par saut de phase, la modulation par saut de phase et d'amplitude, et la modulation d'amplitude en quadrature.

### Etat de la technique antérieure

Dans les systèmes de transmission de données utilisant une modulation DSB-QC, la séquence de bits à transmettre est tout d'abord divisée en groupes de Q bits et on fait correspondre à chacun de ces groupes un de $2^Q$ nombres complexes, ou symboles complexes. Ces symboles sont ensuite transmis un par un à des instants régulièrement espacés de T secondes, appelés instants de signalisation. Chaque symbole est transmis en faisant correspondre respectivement à ses parties réelle et imaginaire une valeur d'amplitude donnée de chacune de deux ondes porteuses en quadrature. Ces deux ondes porteuses sont ensuite combinées et appliquées à l'entrée du canal de transmission.

Le rôle du canal de transmission est de délivrer à sa sortie connectée à un récepteur de données un signal aussi semblable que possible à celui qui a été appliqué à son entrée. Pour des raisons essentiellement économiques on utilise le plus souvent des lignes téléphoniques comme canal de transmission. Or, si les lignes téléphoniques sont bien adaptées pour transmettre correctement la parole, elles ne permettent pas de transmettre des données numériques à des vitesses supérieures ou égales à 4 800 bits par seconde avec une très faible probabilité d'erreur. En effet, ces lignes introduisent des perturbations qui affectent la qualité des signaux pendant leur transmission, et qui rendent difficile une détection correcte des données transmises. Ces perturbations comprennent principalement des distorsions d'amplitude et de phase qui provoquent une interaction entre les signaux successivement transmis, connue sous le nom d'interférence intersymbole. Dans les récepteurs des systèmes de transmission de données à grande vitesse, on utilise généralement un égaliseur automatique adaptatif pour minimiser les effets de l'interférence intersymbole avant de détecter les données.

Le type d'égaliseur adaptatif le plus utilisé dans les systèmes de transmission de données utilisant une modulation DSB-QC est l'égaliseur transversal complexe dont on trouvera un exemple de réalisation dans le brevet français n° 73 26404 publié sous le n° 2 237 379. Dans l'égaliseur décrit dans ce brevet, chacune des composantes en phase et en quadrature du signal reçu est appliquée à l'entrée d'une paire de filtres transversaux et les sorties de ces filtres sont combinées pour générer les composantes en phase et en quadrature du signal égalisé. Les coefficients de ces filtres, qui sont les coefficients de l'égaliseur, sont ajustés automatiquement de façon à satisfaire un critère de performance donné. Avant de transmettre des données, il est nécessaire de faire en sorte que les valeurs des coefficients de l'égaliseur soient aussi proches que possible de valeurs optimales. Pour cela, on prévoit avant la transmission des données une période d'initialisation au cours de laquelle l'émetteur émet une séquence d'initialisation connue à destination du récepteur. Le récepteur compare la séquence d'initialisation reçue avec une séquence d'initialisation de référence générée localement dans le récepteur et qui est identique à la séquence d'initialisation émise, afin d'obtenir un signal d'erreur qui permet l'ajustement initial des coefficients de l'égaliseur à des valeurs aussi proches que possible des valeurs optimales. Les coefficients sont ensuite ajustés continuellement pendant la transmission des données.

Dans un récepteur, l'égaliseur n'est pas le seul dispositif qui doit être convenablement conditionné avant la transmission des données. Il faut notamment établir le détecteur de porteuse et le dispositif de contrôle automatique de gain, puis initialiser le dispositif de récupération d'horloge et enfin initialiser l'égaliseur. C'est pourquoi, avant la transmission des données, on prévoit une période dite de mise en route au cours de laquelle l'émetteur émet une séquence dite de mise en route pour conditionner convenablement l'ensemble des dispositifs du récepteur. La séquence de mise en route comprend généralement une séquence de synchronisation pour conditionner le détecteur de porteuse, le dispositif de contrôle automatique de gain, et le dispositif de récupération d'horloge, suivie d'une séquence d'initialisation pour initialiser l'égaliseur. On comprendra qu'il est alors nécessaire de prévoir dans le récepteur un détecteur de séquence d'initialisation pour détecter l'instant de début de cette séquence et déclencher alors le processus d'initialisation de l'égaliseur.

Le Comité Consultatif International Télégraphique et Téléphonique (CCITT) dans ses avis V27 bis et V27 ter, concernant la standardisation des modems 4 800 bits par seconde, a recommandé l'utilisation d'une séquence de mise en route qui comprend une séquence de synchronisation constituée par l'onde porteuse, ou porteuse, dont la phase fait l'objet d'inversions de phase successives de 180°, suivie d'une séquence d'initialisation d'égaliseur constituée par la même porteuse dont la phase fait l'objet de changements pseudo-aléatoires de 0° et de 180°.

La demande de brevet français n° 77 15295 publiée sous le n° 2 352 456 décrit deux procédés pour détecter les séquences de synchronisation et d'initialisation et le passage de la séquence de synchronisation à la séquence d'initialisation dans le cas où la séquence de synchronisation a un spectre composé d'une raie à la fréquence de la porteuse et de deux raies symétriques par rapport à cette première raie, et où la séquence d'initialisation a un spectre réparti sur toute la bande de fréquence utilisée pour la transmission des données.

Le premier procédé décrit dans la demande de brevet précitée prévoit l'utilisation d'un filtre passe-bande dont la bande passante est telle que l'énergie à la sortie du filtre est très faible pendant la séquence de synchronisation et augmente fortement à partir du début de la séquence d'initialisation. Une mesure de l'énergie à la sortie du filtre peut permettre de détecter les séquences et le passage d'une séquence à l'autre. Ce procédé est prévu pour une séquence de synchronisation qui est différente de celle recommandée par les avis V27 bis et V27 ter du CCITT laquelle n'a pas de raie spectrale à la fréquence de l'onde porteuse. En outre, comme mentionné dans la demande de brevet précitée, le procédé ci-dessus présente l'inconvénient que le filtre passe-bande peut amortir les phénomènes transitoires qui se produisent lors du passage d'une séquence à l'autre et fournir alors des indications erronées.

Le second procédé décrit dans la demande de brevet précitée n° 77 15295 prévoit l'utilisation d'un filtre pour extraire du signal reçu la composante à la fréquence de la porteuse, et d'un dispositif pour détecter les passages par zéro de cette composante. La mesure des intervalles de temps séparant les passages par zéro permet de détecter les séquences et la transition entre ces séquences. Ce second procédé n'est pas applicable aux séquences conformes aux avis V27 bis et V27 ter du CCITT puisque la séquence de synchronisation recommandée par ces avis n'a pas de raie spectrale à la fréquence de l'onde porteuse.

Exposé de l'invention

L'objet principal de l'invention est de fournir pour un récepteur de données utilisant une modulation DSB-QC un procédé et un dispositif pour détecter le début d'une séquence aléatoire de changements de phase de 0° et de 180° de la porteuse lorsque cette séquence est précédée par une séquence d'inversions de phase de 180° successives de la porteuse, qui soient précis et insensibles aux bruits.

Un autre objet de l'invention est de fournir un procédé et un dispositif pour détecter le début de la séquence d'initialisation d'égaliseur recommandée par les avis V27 bis et V27 ter du CCITT.

Ces objets et d'autres sont atteints d'une manière générale par l'invention qui permet, dans un récepteur pour un système de transmission de données utilisant une modulation DSB-QC et dans lequel l'émetteur émet une première séquence constituée par la porteuse dont la phase fait l'objet d'inversions successives de 180° à la cadence de signalisation 1/T, suivie par une seconde séquence constituée par la porteuse dont la phase fait l'objet de changements pseudo-aléatoires de 0° et de 180°, le premier de ces changements étant un changement de 0°, de détecter l'instant de début de ladite seconde séquence. Le procédé de l'invention comprend les étapes suivantes :

— le filtrage du signal reçu pour en extraire ses composantes aux fréquences $f_1$ et $f_2$, les fréquences $f_1$ et $f_2$ étant définies par les relations :

$$f_1 = f_c - 1/2T \qquad f_2 = f_c + 1/2T$$

où $f_c$ est la fréquence de la porteuse,

— la combinaison de ces composantes à $f_1$ et $f_2$ pour engendrer un signal S à la fréquence 1/T,

— la mesure de l'énergie du signal S, et

— la détection de l'instant où cette énergie chute au-dessous de sa valeur moyenne, cet instant étant indicatif de l'instant de début de ladite seconde séquence.

Selon un autre aspect de l'invention, on détecte l'instant de début de la seconde séquence en détectant l'instant où l'amplitude de la composante en phase du signal S, échantillonnée à la cadence de signalisation, décroît substantiellement.

L'invention propose également divers dispositifs pour mettre en œuvre le procédé de l'invention.

Brève description des figures

D'autres objets, caractéristiques et avantages de la présente invention ressortiront mieux de l'exposé qui suit, fait en référence aux dessins annexés à ce texte, qui représentent deux modes de réalisation préférés de celle-ci.

La figure 1 représente le bloc diagramme d'un récepteur DSB-QC incorporant l'invention.

La figure 2 représente un premier mode de réalisation du détecteur de séquence conforme à l'invention.

La figure 3 représente un seconde mode de

realisation du détecteur de séquence conforme à l'invention.

La figure 4 représente un exemple de réalisation du générateur de séquence de référence.

Modes de réalisation préférés de l'invention

L'invention concerne d'une manière générale un procédé et un dispositif pour détecter le début d'une séquence pseudo-aléatoire de changements de phase de 0° et 180° de la porteuse lorsque cette séquence est précédée par une séquence d'inversions de phase de 180° successives de la porteuse. Cependant, dans un souci de clarté et sans pour autant nuire à la généralité de l'invention, on décrira son application à la détection de la séquence d'initialisation d'égaliseur recommandée par les avis V27 bis et V27 ter du CCITT.

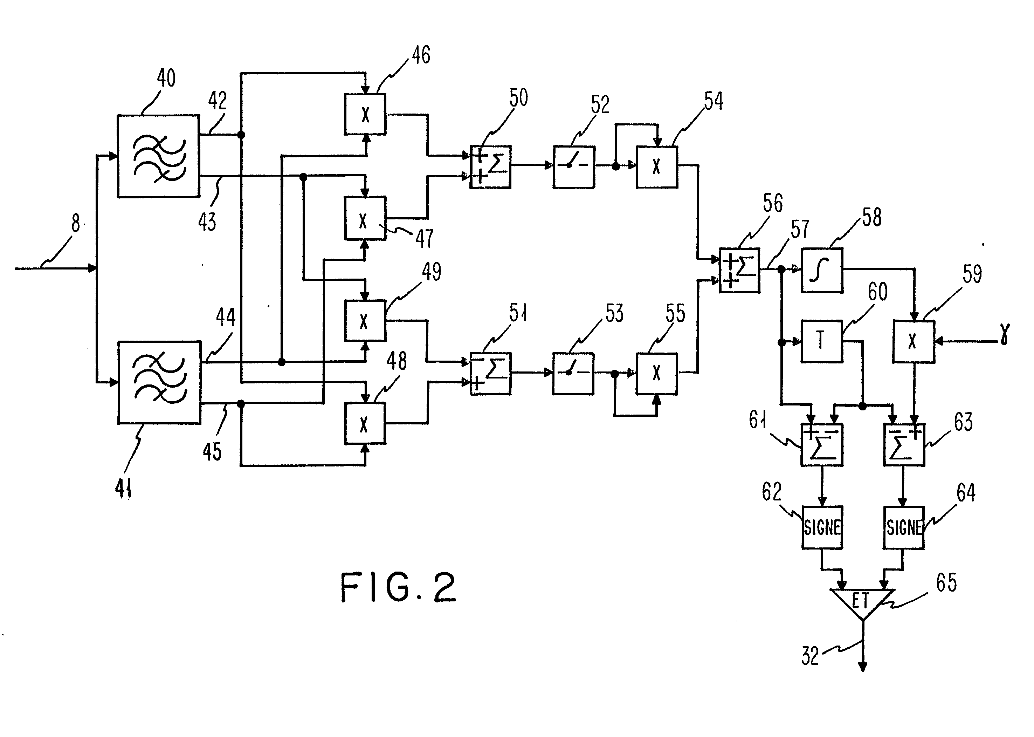

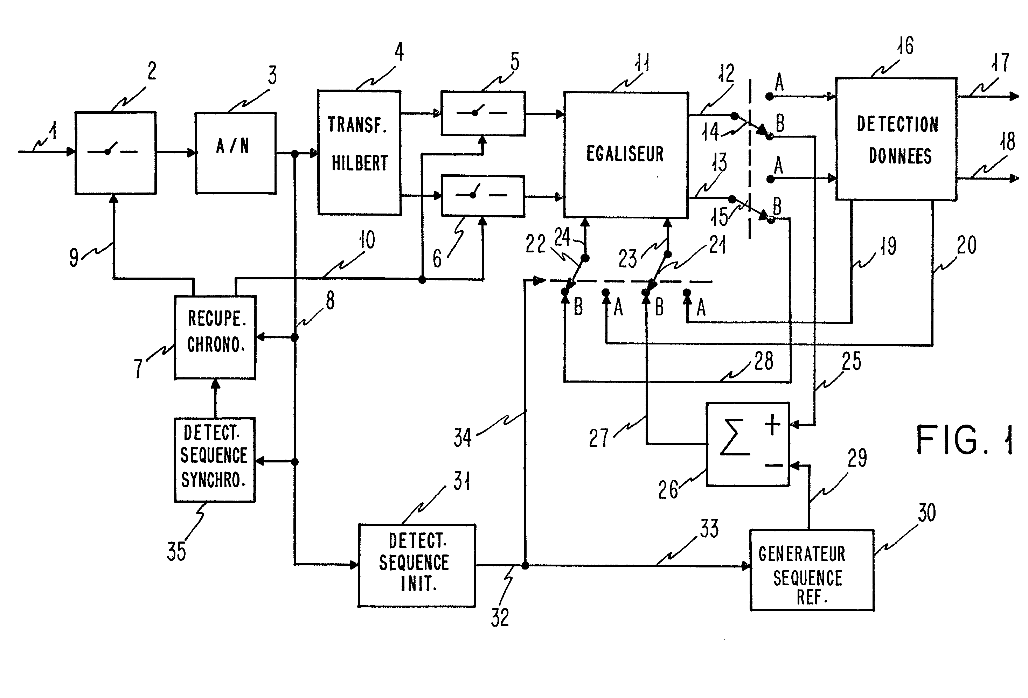

Pour situer l'invention dans son contexte, on a représenté sur la figure 1 le bloc diagramme typique d'un récepteur DSB-QC 4 800 bits par seconde conforme aux avis V27 bis et V27 ter du CITT et incorporant le détecteur de séquence de l'invention. Le signal reçu du canal de transmission, dont l'énergie a été normalisée par un circuit de contrôle automatique de gain (non représenté) et qui a été filtré par un filtre passe-bande (non représenté) qui rejette le bruit hors bande, est appliqué par une ligne 1 à un dispositif d'échantillonnage 2 dans lequel il est échantillonné à la cadence 1/τ. La cadence 1/τ est choisie égale à un multiple m/T de la cadence de signalisation 1/T de façon à ce que l'on dispose à la sortie du dispositif 2 d'un nombre d'échantillons suffisant pour bien définir le signal reçu. La valeur de l'amplitude de ces échantillons est convertie en numérique dans un convertisseur analogique-numérique 3 et appliquée à l'entrée d'un transformateur de Hilbert numérique 4.

Un transformateur de Hilbert est un dispositif qui a une entrée et deux sorties et qui fournit respectivement à ses deux sorties les composantes en phase et en quadrature du signal appliqué à son entrée. On en trouvera un exemple de réalisation numérique dans l'article « Theory and Implementation of the Discrete Hilbert Transform », paru dans « Digital Signal Processing », L.R. Robiner et C.M. Rader, 1972 IEEE Press.

Les composantes en phase et en quadrature du signal reçu, fournies par le transformateur de Hilbert 4 sont respectivement ré-échantillonnées à la cadence de signalisation 1/T par deux dispositifs d'échantillonnage 5 et 6. Un dispositif de récupération de chronologie 7 a son entrée reliée par une ligne 8 à la sortie du convertisseur analogique-numérique 3 et commande le dispositif d'échantillonnage 2, par une ligne 9, les dispositifs d'échantillonnage 5 et 6 par une ligne 10 et tous les autres composants du récepteur par des lignes non représentées. On trouvera un exemple de réalisation d'un tel dispositif de récupération de chronologie dans le brevet français n° 75 14020 déposé par la demanderesse le 25 avril 1975 et publié sous le n° 2 309 089. Les composantes en phase et en quadrature du signal reçu, disponibles respectivement à la sortie des dispositifs d'échantillonnage 5 et 6, sont appliquées aux entrées d'un égaliseur transversal complexe adaptatif 11 dont on trouvera un exemple de réalisation dans le brevet français n° 73 26404 déposé par la demanderesse le 12 juillet 1973 et publié sous le n° 2 237 379.

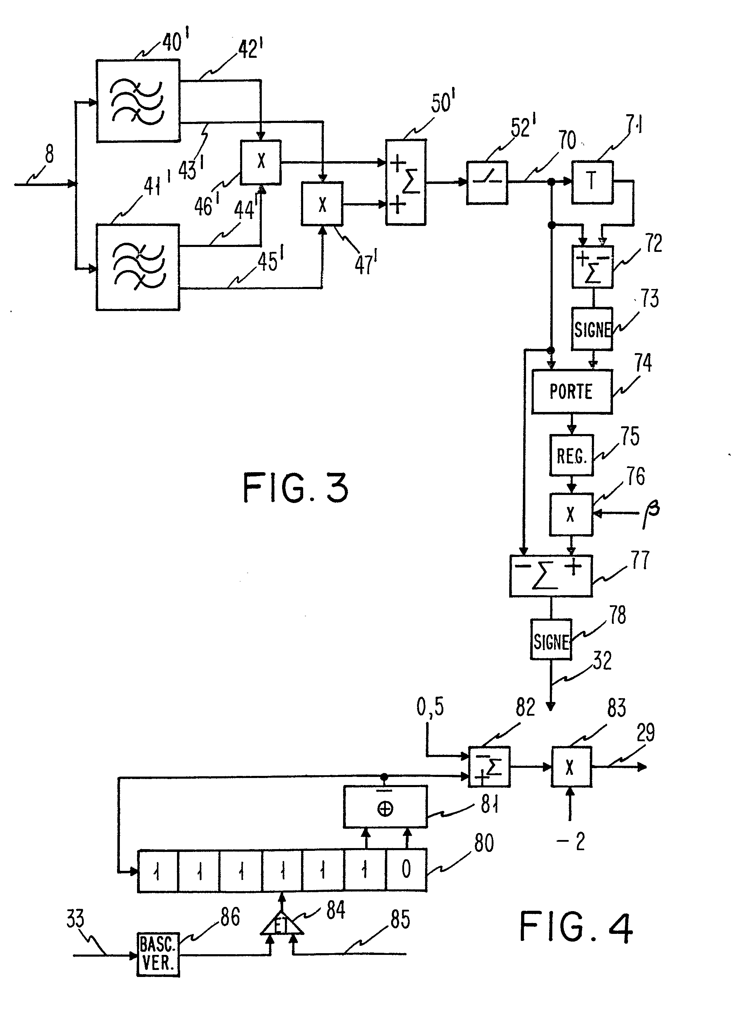

Les composantes en phase et en quadrature du signal égalisé sont respectivement appliquées par des lignes 12 et 13 à l'entrée commune de deux commutateurs à deux positions 14 et 15. Les positions A des commutateurs 14 et 15 sont reliées aux entrées d'un système de détection de données 16 qui fournit respectivement sur des lignes 17 et 18 les composantes en phase et en quadrature des symboles de données détectés. Le système 16 fournit en outre sur des lignes 19 et 20 les composantes en phase et en quadrature d'un signal d'erreur représentatif de l'écart entre les composantes du signal égalisé et celles du symbole de données détecté correspondant. On trouvera un exemple de réalisation d'un système de détection de données dans le brevet français n° 74 43560 déposé par la demanderesse le 27 décembre 1974 et publié sous le n° 2 296 322. Les lignes 19 et 20 sont reliées respectivement à la position A de deux commutateurs à deux positions 21 et 22 dont les sorties communes sont reliées respectivement à l'égaliseur 11 par des lignes 23 et 24. La position B du commutateur 14 est reliée par une ligne 25 à l'entrée (+) d'un soustracteur 26 dont la sortie est reliée à la position B du commutateur 21 par une ligne 27. La position B du commutateur 15 est reliée par une ligne 28 à la position B du commutateur 22. L'entrée (−) du soustracteur 26 est reliée par une ligne 29 à la sortie d'un générateur de séquence d'initialisation de référence 30 qui sera décrit en détail en référence à la figure 4.

La ligne 8 est en outre reliée à l'entrée d'un détecteur de séquence d'initialisation 31. Le détecteur de séquence d'initialisation 31 est un détecteur de séquence conforme à l'invention et sera décrit en détail en référence aux figures 2 et 3. Il a sa sortie 32 reliée au générateur 30 par une ligne 33, aux commutateurs 21 et 22 par une ligne 34, et aux commutateurs 14 et 15 par une ligne non représentée.

Un détecteur de séquence de synchronisation 35 a son entrée reliée à la ligne 8 et sa sortie reliée au dispositif de récupération de chronologie 7. On trouvera un exemple de réalisation d'un tel détecteur dans l'IBM Technical Disclosure Bulletin, Vol. 18, n° 8, janvier 1976, pages 2 546 et 2 547.

En fonctionnement en mode de données, les commutateurs 14, 15, 21 et 22 sont en position A. Le signal reçu dont les composantes en phase et en quadrature sont respectivement disponibles à la sortie des dispositifs d'échantillonnage 5 et 6, est égalisé dans l'égaliseur 11, et les composantes en phase et en quadrature du signal égalisé sont appliquées au système de détection 16 à travers les commutateurs 14 et 15 en position A. A chaque instant de signalisation, le système de détection de données 16 fournit sur les lignes 17 et 18 les composantes du symbole détecté, et sur les lignes 19 et 20 les composantes du signal d'erreur. Les composantes de ce signal d'erreur sont appliquées à travers les commutateurs 21 et 22 en position A à l'égaliseur 11 qui en dérive des signaux de commande pour ajuster ses coefficients.

Pendant la période de mise en route, le récepteur reçoit tout d'abord la séquence de synchronisation. Celle-ci est détectée par le détecteur de séquence de synchronisation 35 qui commande entre autre le début du processus de synchronisation du dispositif de récupération de chronologie 7 comme décrit en détail dans le brevet précité n° 75 14020. Le récepteur reçoit ensuite la séquence d'initialisation dont le début est détecté par le détecteur de séquence d'initialisation 31 qui fait passer les commutateurs 14, 15, 21 et 22 en position B et initie la génération de la séquence d'initialisation de référence par le générateur 30 qui fournit séquentiellement les symboles de la séquence à la cadence de signalisation.

Le générateur 30 devrait fournir simultanément les composantes en phase et en quadrature de chacun des symboles de la séquence de référence. Ces composantes devraient être retranchées respectivement des composantes en phase et en quadrature du signal égalisé pour fournir les composantes en phase et en quadrature du signal d'erreur appliqué à l'égaliseur 11. Or la séquence de référence recommandée par le CCITT est telle que tous les symboles qui la composent ont une composante en quadrature nulle. C'est pourquoi dans le récepteur illustré sur la figure 1, à chaque instant de signalisation, la composante en phase du signal d'erreur appliquée à l'égaliseur 11 est fournie par le soustracteur 26 qui retranche la composante en phase du symbole de référence qu'il reçoit par la ligne 29 de la composante en phase du signal égalisé qu'il reçoit par la ligne 25, et la composante en quadrature du signal d'erreur est fournie par la composante en quadrature du signal égalisé qui est appliquée à l'égaliseur 11 par la ligne 28 et le commutateur 22 en position B.

Pour une meilleure compréhension de l'invention on décrira maintenant le procédé de l'invention appliqué à la détection de la séquence d'initialisation.

La séquence de mise en route recommandée par les avis V27 bis et V27 ter du CCITT comprend une séquence de synchronisation constituée par la porteuse dont la phase fait l'objet d'inversions successives de 180°, suivie par une séquence d'initialisation d'égaliseur constituée par la porteuse dont la phase fait l'objet de changements pseudo-aléatoires de 0° et de 180°. La séquence d'initialisation est dérivée d'une séquence pseudo-aléatoire binaire générée par le polynôme.

$$1 + x^{-6} + x^{-7}$$

Chaque fois que la séquence binaire contient un zéro binaire, la phase de la porteuse fait l'objet d'un changement de 0°, et chaque fois qu'elle contient un « un » binaire, la phase de la porteuse fait l'objet d'un changement de 180°. En outre, la séquence binaire commence par la configuration binaire 0111110, c'est-à-dire que la séquence d'initialisation commence par les changements de phase de 0°, 180°, 180°, 180°, 180°, 180°, 0°. Le premier changement de phase de 0° de la séquence d'initialisation introduit une inversion de la phase des composantes du spectre de fréquence de la séquence de synchronisation et le détecteur de l'invention tire avantage de cette inversion de phase pour détecter le début de la séquence d'initialisation.

La séquence de synchronisation a un spectre de fréquence constitué par deux raies situées respectivement aux fréquences $f_1$ et $f_2$ définies par les relations :

$$f_1 = f_c - 1/2T \qquad f_2 = f_c + 1/2T \qquad (1)$$

où
$f_c$ est la fréquence de la porteuse
$1/T$ est la cadence de signalisation.

L'inversion de phase créée par le début de la séquence d'initialisation introduit une inversion de la phase des composantes à $f_1$ et $f_2$ de la séquence de synchronisation.

Selon l'invention on détecte cette inversion de phase au niveau d'un signal S à la fréquence $1/T$ reconstruit à partir des composantes à $f_1$ et $f_2$ du signal reçu. L'inversion de la phase des composantes à $f_1$ et $f_2$ crée une chute de l'énergie du signal reconstruit S. Une mesure de l'énergie du signal S permet d'en détecter la chute qui fournit une détection précise et insensible au bruit de la séquence d'initialisation.

On décrira maintenant en détail le dispositif de détection conforme à un premier aspect de l'invention en se référant à la figure 2.

Le signal reçu disponible à la sortie du convertisseur analogique-numérique 3 est appliqué par la ligne 8 (figure 1) à l'entrée de deux filtres à bande étroite 40 et 41 centrés respectivement sur les fréquences $f_1$ et $f_2$ définies plus haut. Le filtre 40 fournit respectivement sur deux sorties 42 et 43 les composantes en phase et en quadrature de la composante à $f_1$ du signal reçu. Le filtre 41 fournit respectivement sur deux sorties 44 et 45 les composantes en phase et en quadrature de la composante à $f_2$ du signal reçu. Ces deux filtres sont semblables et on en trouvera une description détaillée dans le brevet français précité n° 75 14020. Les sorties 42 et 44 sont appliquées aux entrées d'un multiplicateur 46, les sorties 43 et 45 sont appliquées aux entrées d'un multiplicateur 47, les sorties 42 et 45 sont appliquées aux entrées d'un multiplicateur 48, et les sorties 43 et 44 sont appliquées aux entrées d'un multiplicateur 49. Les sorties des multiplicateurs 46 et 47 sont additionnées dans un additionneur 50. La sortie du multiplicateur 49 est retranchée de la sortie du multiplicateur 48 dans un soustracteur 51.

Aux instants d'échantillonnage $k\tau$, $1/\tau = m/T$, le filtre 40 fournit respectivement sur ses sorties 42 et 43 des signaux de la forme

$$s_1 = A_1 \cos (2\pi f_1 k\tau + \phi_1) \qquad (2)$$
$$s_2' = A_1 \sin (2\pi f_1 k\tau + \phi_1) \qquad (3)$$

De même, le filtre 41 fournit respectivement sur ses sorties 44 et 45 des signaux de la forme :

$$s_2 = A_2 \cos (2\pi f_2 k\tau + \phi_2) \qquad (4)$$
$$s_2' = A_2 \sin (2\pi f_2 k\tau + \phi_2) \qquad (5)$$

On obtient alors respectivement aux sorties de l'additionneur 50 et du soustracteur 51 des signaux de la forme :

$$s = A \cos (2\pi (f_2 - f_1)k\tau + \phi_2 - \phi_1) \qquad (6)$$
$$s' = A \sin (2\pi (f_2 - f_1)k\tau + \phi_2 - \phi_1) \qquad (7)$$

D'après les relations (1), on peut écrire les relations (6) et (7) sous la forme

$$s = A \cos (2\pi/Tk\tau + \phi_2 - \phi_1) \qquad (8)$$
$$s' = A \sin (2\pi/Tk\tau + \phi_2 - \phi_1) \qquad (9)$$

On notera que les signaux s et s' sont respectivement les composantes en phase et en quadrature d'un signal S dont la fréquence est égale à la cadence de signalisation 1/T.

Les signaux s et s' sont échantillonnés à la cadence de signalisation 1/T dans deux dispositifs d'échantillonnage 52 et 53 respectivement. La sortie du dispositif d'échantillonnage 52 est appliquée aux deux entrées d'un multiplicateur 54, et la sortie du dispositif d'échantillonnage 53 est appliquée aux deux entrées d'un multiplicateur 55. Les sorties des multiplicateurs 54 et 55 sont sommées dans un additionneur 56 qui fournit à sa sortie l'énergie E du signal S. Tant que le signal reçu est constitué par la séquence de synchronisation, l'énergie E est stable, au bruit près, autour d'une valeur constante que l'on notera $E_o$, et chute considérablement au-dessous de $E_o$ à l'instant de l'inversion de phase, c'est-à-dire au début de la séquence d'initialisation.

Selon un premier aspect de l'invention on détecte l'instant de début de la séquence d'initialisation en détectant la chute de l'énergie E.

Il existe plusieurs moyens pour détecter cette chute d'énergie. On peut par exemple détecter l'instant où l'énergie atteint sa valeur minimum ou encore détecter l'instant où l'énergie a chuté d'une quantité prédéterminée.

Dans l'exemple de réalisation illustré sur la figure 2, on détecte la chute d'énergie lorsque l'énergie atteint sa valeur minimum.

Si on désigne par $E(nT)$ et $E[(n-1)T]$ l'énergie du signal S aux instants de signalisation nT et $(n-1)T$, on décidera que l'énergie du signal S a atteint sa valeur minimum lorsque les deux conditions suivantes sont satisfaites :

$$E[(n-1)T] < \gamma E_o \qquad (10)$$

et

$$E(nT) > E[(n-1)T] \qquad (11)$$

où

$\gamma$ est un facteur de pondération compris entre 0 et 1 et égal, par exemple, à 0,5.

Sur la figure 2, l'énergie à la sortie de l'additionneur 56 est appliquée par une ligne 57 à l'entrée d'un intégrateur 58 qui fournit l'énergie $E_o$. Cette énergie $E_o$ est multipliée par le facteur $\gamma$ dans un multiplicateur 59. La sortie de l'additionneur 56 est en outre appliquée à l'entrée d'un élément de retard 60 qui introduit un retard égal à T sec. Si on désigne par $E(nT)$ l'énergie à l'entrée de l'élément 60 on aura à sa sortie l'énergie $E[(n-1)T]$. L'entrée et la sortie de l'élément 60 sont reliées respectivement aux sorties (+) et (−) d'un soustracteur 61 qui fournit la quantité

$$E(nT) - E[(n-1)T]$$

Un dispositif de détermination de signe 62, connecté à la sortie du soustracteur 61 fournit un niveau haut si la quantité

$$E(nT) - E[(n-1)T]$$

est positive, c'est-à-dire si la condition exprimée par la relation (11) est satisfaite.

La sortie de l'élément 60 est en outre reliée à l'entré (−) d'un soustracteur 63 dont l'entrée (+) est reliée à la sortie du multiplicateur 59. Un dispositif de détermination de signe 64 connecté à la sortie du soustracteur 63 fournit un niveau haut si la quantité

$$\gamma E_o - E[(n-1)T]$$

est positive, c'est-à-dire si la condition exprimée par la relation (10) est satisfaite. Les sorties des dispositifs 62 et 64 sont appliquées aux entrées d'une porte ET 65 qui fournit à sa sortie sur la ligne 32 (figure 1) un niveau haut lorsque les deux conditions exprimées par les relations (10) et (11) sont satisfaites. Le passage au niveau haut de la sortie de la porte ET 65 est indicatif de l'instant de début de la séquence d'initialisation.

L'inversion de la phase des composantes à $f_1$ et $f_2$ crée une chute de l'énergie du signal S comme vu plus haut, mais aussi une chute de l'amplitude de la composante en phase de ce signal. La composante en phase s du signal S a la forme exprimée par la relation (8) rappelée ci-dessous :

$$s = A \cos (2\pi/Tk\tau + \phi_2 - \phi_1) \qquad (8)$$

Tant que le signal reçu est constitué par la séquence de synchronisation, la quantité $\phi_2 - \phi_1$ tend vers zéro comme décrit dans le brevet français précité n° 75 14020, et la composante s échantillonnée à la cadence de signalisation 1/T a son amplitude qui croît continuellement. Lorsque l'inversion de phase se produit l'amplitude de la composante s chute brusquement.

Selon un second aspect de l'inversion on détecte l'instant de début de la séquence d'initialisation en détectant la chute de l'amplitude de la composante s. Comme on l'a vu plus haut à propos de la chute de l'énergie E, il existe plusieurs moyens pour détecter la chute de l'amplitude de la composante s. Dans l'exemple de réalisation illustré sur la figure 3, on détecte la chute de l'amplitude de s lorsqu'elle descend en dessous d'une fraction de sa valeur maximum.

Si on désigne par $s(nT)$, $s[(n-1)T]$, l'amplitude de la composante s aux instants de signalisation $nT$ et $(n-1)T$, respectivement on décidera que l'amplitude de la composante s est en dessous d'une fraction de sa valeur maximum $s_m$ lorsque la condition suivante est satisfaite :

$$s(nT) < \beta s_m \qquad (12)$$

où $\beta$ est un facteur dont la valeur est inférieure à 1 et égale, par exemple, à 0,5.

La vérification de la condition ci-dessus conduit à l'utilisation d'un détecteur de séquence simplifié qu'on a représenté sur la figure 3. Les détecteurs des figures 2 et 3 comportent des dispositifs communs. Les dispositifs de la figure 3 qui se retrouvent dans la figure 2 portent les mêmes références numériques surmontées par le prime (').

Le signal reçu disponible à la sortie du convertisseur analogique-numérique 3 est appliqué par la ligne 8 (figure 1) à l'entrée des filtres passe-bande 40' et 41' centrés respectivement sur les fréquences $f_1$ et $f_2$. Le filtre 40' fournit sur ses deux sorties 42' et 43' les composantes en phase et en quadrature de la composante à $f_1$ du signal reçu. Le filtre 41' fournit sur ses deux sorties 44' et 45' les composantes en phase et en quadrature de la composante à $f_2$ du signal reçu. La sortie 42' est multipliée par la sortie 44' dans un multiplicateur 46'. La sortie 43' est multipliée par la sortie 45' dans un multiplicateur 47'. Les sorties des multiplicateurs 46' et 47' sont sommées dans l'additionneur 50'. On obtient à la sortie de l'additionneur 50', la composante en phase s du signal S comme vu plus haut. Le signal s est échantillonné à la cadence de signalisation 1/T dans le dispositif d'échantillonnage 52'.

Le signal s échantillonné est appliqué par une ligne 70 à l'entrée d'un élément de retard 71 qui introduit un retard égal à T sec. Si on désigne par $s(nT)$ le signal à l'entrée de l'élément 70, on aura à sa sortie le signal $s[(n-1)T]$. L'entrée et la sortie de l'élément 71 sont reliées respectivement aux entrées (+) et (−) d'un soustracteur 72 qui fournit à sa sortie la quantité $s(nT) - s[(n-1)T]$.

Un dispositif de détermination de signe 73 connecté à la sortie du soustracteur 72 fournit un niveau haut si la quantité

$$s(nT) - s[(n-1)T]$$

est positive, c'est-à-dire si l'amplitude du signal s croît.

Le signal s échantillonné est en outre appliqué à une entrée d'une porte 74 dont l'autre entrée est reliée à la sortie du dispositif de détermination de signe 73.

La sortie de la porte 74 est reliée à un registre 75 dont la sortie est reliée à une entrée d'un multiplicateur 76. L'autre entrée du multiplicateur 76 reçoit la valeur $\beta$. La sortie du multiplicateur 76 est reliée à l'entrée (+) d'un soustracteur 77 dont l'entrée (−) est reliée à la ligne 70. La sortie du soustracteur 77 est reliée à un dispositif de détermination de signe 78 dont la sortie est reliée à la ligne 32 (figure 1).

Si l'amplitude du signal s croît, on obtient à la sortie du dispositif de détermination de signe 73 un niveau haut qui rend conductrice la porte 74 et autorise le transfert de la valeur de $s(nT)$ qui est alors emmagasinée dans le registre 75.

Tant que l'amplitude du signal s croît, la porte 74 sera ouverte et le contenu du registre 75 sera mis à jour par la plus grande amplitude du signal s. A la fin de la croissance de l'amplitude du signal s, le registre 75 contiendra la valeur maximale $s_m$ de cette amplitude. Lorsque l'amplitude du signal s décroît la porte 74 est rendue non conductrice, ce qui maintient la valeur $s_m$ dans le registre 75. La valeur $s_m$ est multipliée par $\beta$ dans le multiplicateur 76 qui fournit ainsi à sa sortie la quantité

$$\beta s_m$$

Le soustracteur 77 fournit la quantité

$$\beta s_m - s(nT)$$

Si cette quantité est positive, c'est-à-dire si la condition (12) est satisfaite, la sortie du dispositif 78 passe au niveau haut. Le passage au niveau haut de la sortie du dispositif 78 est indicatif de l'instant de début de la séquence d'initialisation.

On a représenté sur la figure 4 un exemple de réalisation du générateur de séquence de référence 30 de la figure 1. Le générateur illustré sur la figure 4 est conforme aux avis V27 bis et V27 ter du CCITT. Il comprend un registre à décalage à sept étages 80. Les sorties des sixième et septième étages sont reliées aux entrées d'un circuit OU Exclusif inversé 81 dont la sortie est reliée à l'entrée du premier étage du registre à décalage 80. La sortie du circuit OU Exclusif inversé 81 est en outre reliée à l'entrée (+) d'un soustracteur 82 qui reçoit sur son entrée (−) la valeur 0,5 codée en binaire. La sortie du soustracteur 82 est reliée à une entrée d'un multiplicateur 83 qui reçoit sur son autre entrée la valeur −2 codée en binaire. La sortie du multiplicateur 83 est reliée à la ligne 29 (figure 1). Le générateur de la figure 4 comprend en outre une porte ET 84 dont une entrée reçoit par une ligne 85 des impulsions à la cadence de signalisation 1/T fournies par le dispositif de récupération de chronologie 7. L'autre entrée de la porte ET 84 est reliée à la sortie d'une bascule à verrouillage 86 dont l'entrée est reliée à la ligne 33 (figure 1). La sortie de la porte ET 84 commande le décalage du registre à décalage 80.

En fonctionnement, le registre à décalage 80 est au préalable chargé avec la configuration de bits 1111110 comme illustré sur la figure. Le registre à décalage 80 peut être chargé par exemple sous la commande du détecteur de séquence de synchronisation 35. Lorsque l'instant de début de la séquence d'initialisation est détecté un niveau haut apparaît sur la ligne 33 comme vu plus haut. Le passage au niveau haut de la ligne 33 enclenche la bascule 86 dont la sortie rend conductrice la porte ET 84 permettant ainsi aux impulsions de chronologie sur la ligne 85 d'être appliquées comme impulsions de décalage au registre à décalage 80. Chaque fois qu'un bit « 0 » apparaît à la sortie du circuit OU Exclusif inversé 81, le générateur 30 doit fournir le symbole de composantes en phase et en quadrature 1 et 0 correspondant à un changement de phase de 0°. Chaque fois qu'un bit « 1 » apparaît à la sortie du circuit 81, le générateur 30 doit fournir le symbole de composantes −1 et 0 correspondant à un changement de phase de 180°. Ceci est obtenu au moyen du soustracteur 82 et du multiplicateur 83. Les composantes nulles des symboles sont ignorées comme vu plus haut en référence à la figure 1. Si un bit « 0 » apparaît à la sortie du circuit 81, la valeur 0,5 lui est retranchée dans le soustracteur 82 qui fournit ainsi la valeur −0,5. Cette valeur est multipliée par la valeur −2 dans le multiplicateur 83 qui fournit ainsi la valeur 1 qui représente la composante en phase du symbole de la séquence de référence. On vérifiera que si un bit « 1 » apparaît à la sortie du circuit 81 on obtient bien la valeur −1 à la sortie du multiplicateur 83.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

## Revendications

1. Procédé de détection de l'instant de début d'une séquence pseudo-aléatoire de changements de phase de 0° et 180° de la porteuse, dans un récepteur de données utilisant une modulation à double bande latérale-porteuses en quadrature, la séquence pseudo-aléatoire étant précédée par une séquence d'inversions de phase de la porteuse, et les séquences étant telles que le début de la séquence pseudo-aléatoire crée une inversion de la phase des composantes du spectre de fréquence de la séquence d'inversions, caractérisé en ce qu'il comprend les étapes suivantes :

a) le filtrage du signal reçu pour en extraire un premier signal ($s_1$, $s'_1$) à la fréquence $f_1$, et un second signal ($s_2$, $s'_2$) à la fréquence $f_2$, les fréquences $f_1$ et $f_2$ étant définies par les relations :

$$f_1 = f_c - 1/2T \qquad f_2 = f_c + 1/2T$$

où

$f_c$ est la fréquence de la porteuse, et
$1/T$ est la cadence de signalisation,

b) la combinaison desdits premier et second signaux pour engendrer un troisième signal (S) à la fréquence $1/T$,

c) la mesure de l'énergie (E) dudit troisième signal, et

d) la détection de l'instant où cette énergie chute au-dessous de sa valeur moyenne, cet instant étant indicatif de l'instant de début de ladite seconde séquence.

2. Procédé selon la revendication 1, caractérisé en ce que la chute d'énergie dudit troisième signal est détectée par détection de l'instant où cette énergie atteint sa valeur minimum.

3. Procédé de détection de l'instant de début d'une séquence pseudo-aléatoire de changements de phase de 0° et 180° de la porteuse, dans un récepteur de données utilisant une modulation à double bande latérale-porteuses en quadrature, la séquence pseudo-aléatoire étant précédée par une séquence d'inversions de phase de la porteuse, et les séquences étant telles que le début de la séquence pseudo-aléatoire crée une inversion de la phase des composantes du spectre de fréquence de la séquence d'inversions, caractérisé en ce qu'il comprend les étapes suivantes :

a) le filtrage du signal reçu pour en extraire un premier signal ($s_1$, $s'_1$) à la fréquence $f_1$, et un second signal ($s_2$, $s'_2$) à la fréquence $f_2$, les fréquences $f_1$ et $f_2$ étant définies par les relations :

$$f_1 = f_c - 1/2T \qquad f_2 = f_c + 1/2T$$

où

$f_c$ est la fréquence de la porteuse, et
$1/T$ est la cadence de signalisation,

b) la combinaison desdits premier et second signaux pour engendrer la composante en phase (s) d'un troisième signal (S) à la fréquence $1/T$,

c) l'échantillonnage de ladite composante en phase à la cadence de signalisation $1/T$, et

d) la détection de l'instant où l'amplitude de ladite composante en phase échantillonnée décroît substantiellement, cet instant étant indicatif de l'instant de début de ladite seconde séquence.

4. Procédé selon la revendication 3, caractérisé en ce que la décroissance de ladite amplitude est détectée par détection de l'instant où cette amplitude devient inférieure à une fraction de sa valeur maximum.

5. Dispositif de mise en œuvre du procédé

selon l'une des revendications 1 et 2, caractérisé en ce qu'il comprend :

un premier filtre (40) pour extraire du signal reçu un premier signal ($s_1$, $s'_1$) à la fréquence $f_1$,

un second filtre (41) pour extraire du signal reçu un second signal ($s_2$, $s'_2$) à la fréquence $f_2$,

des moyens (46-51) pour engendrer à partir desdits premier et second signaux un troisième signal (S) à la fréquence 1/T,

des moyens (54-56) de mesure de l'énergie dudit troisième signal, et

des moyens de détection (58-65) pour détecter l'instant où cette énergie chute au-dessous de sa valeur moyenne.

6. Dispositif selon la revendication 5 caractérisé en ce que les premier et second filtres fournissent respectivement les composantes en phase et en quadrature des premier et second signaux, et en ce que les moyens pour engendrer le troisième signal produisent les composantes en phase (s) et en quadrature (s') du troisième signal à partir des composantes en phase et en quadrature des premier et second signaux.

7. Dispositif selon la revendication 6, caractérisé en ce que les moyens de mesure comprennent :

un premier multiplicateur (54) pour multiplier par elle-même la composante en phase du troisième signal,

un second multiplicateur (55) pour multiplier par elle-même la composante en quadrature du troisième signal, et

des moyens (56) pour sommer les sorties des premier et second multiplicateurs.

8. Dispositif de mise en œuvre du procédé selon l'une des revendications 3 et 4 caractérisé en ce qu'il comprend :

un premier filtre (40') pour extraire du signal reçu les composantes en phase ($s_1$) et en quadrature ($s'_1$) d'un premier signal à la fréquence $f_1$,

un second filtre (41') pour extraire du signal reçu les composantes en phase ($s_2$) et en quadrature ($s'_2$) d'un second signal à la fréquence $f_2$,

des moyens (46', 47', 50') pour engendrer à partir des composantes en phase et en quadrature des premier et second signaux, la composante en phase (s) d'un troisième signal à la fréquence 1/T,

des moyens (52) pour échantillonner la composante en phase du troisième signal à la cadence de signalisation 1/T, et

des moyens (71-78) de détection pour détecter l'instant où l'amplitude de la composante en phase échantillonnée décroît substantiellement.

**Claims**

1. A method for detecting the time of the beginning of a pseudo-random sequence of 0° and 180° carrier phase changes in a data receiver using double sideband-quadrature carrier modulation, whereby the pseudo-random sequence is preceded by a carrier phase reversal sequence, the sequences being such that the beginning of the pseudo-random sequence initiates a phase reversal of the frequency spectrum components of the reversal sequence, characterized in that it includes the following steps :

a) filtering the received signal to extract therefrom a first signal (s1, s'1) at frequency f1, and a second signal, (s2, s'2) at frequency f2, the frequencies being defined by the relations :

$$f1 = fc - 1/2T \quad f2 = fc + 1/2T$$

where

fc is the carrier frequency, and

1/T is the signalling cadence.

b) combining said first and second signals to generate a third signal (s) at frequency 1/T,

c) measuring the energy (E) of said third signal, and

d) detecting the time at which this energy drops below its average value, said time being indicative of the time at which said second sequence starts.

2. A method according to claim 1, characterized in that the energy drop of said third signal is detected by detecting the time at which this energy reaches its minimum value.

3. A method for detecting the start time of a pseudo-random sequence of 0° and 180° carrier phase changes in data receiver using double sideband quadrature carrier modulation, whereby the pseudo-random sequence is preceded by a carrier phase reversal frequency, the sequences being such that the beginning of the pseudo-random sequence initiates a phase reversal of the frequency spectrum components of the reversal sequence, characterized in that it includes the steps of :

a) filtering the received signal to extract therefrom a first signal (s1, s'1) at frequency f1, and a second signal (s2, s'2) at frequency f2, frequencies f1 and f2 being defined by the relations :

$$f1 = fc - 1/2T \quad f2 = fc + 1/2T$$

where

fc is the carrier frequency of the carrier, and

1/T is the signalling cadence,

b) combining said first and second signals to generate the in-phase component (s) of a third signal (S) at frequency 1/T,

c) sampling said in-phase component at signalling cadence 1/T, and

d) detecting the time at which the amplitude of said sampled in-phase component decreases significantly, said time being indicative of the start time of said second sequence.

4. A method according to claim 3, characterized in that the decrease of said amplitude is detected by detecting the time at which this amplitude becomes less than a fraction of its maximum value.

5. A device for implementing the method according to any one of claims 1 and 2, characterized in that it comprises :

a first filter (40) to extract from the received signal a first signal (s1, s'1) at frequency f1,

a second filter (41) to extract from the received signal a second signal (s2, s'2) at frequency f2,

means (46-51) to generate from said first and second signals a third signal (S) at frequency 1/T,

means (54-56) to measure the energy of said third signal, and

detection means (58-65) to detect the time at which this energy drops below its average value.

6. A device according to claim 5, characterized in that the first and second filters supply respectively the in-phase and quadrature components of the first and second signals, and the means for generating the third signal produce the in-phase (s) and quadrature (s') components of the third signal from the in-phase and quadrature components of the first and second signals.

7. A device according to claim 6, characterized in that the measurement means comprise :

a first multiplier (54) for multiplying by itself the in-phase component of the third signal,

a second multiplier (55) for multiplying by itself the quadrature component of the third signal, and

means (56) for summing the outputs of the first and second multipliers.

8. A device for implementing the method according to any one of claims 3 and 4, characterized in that it comprises :

a first filter (40') for extracting from the received signals the in-phase (s1) and quadrature (s'1) components of a first signal at frequency f1,

a second filter (41') for extracting from the received signal the in-phase (s2) and quadrature (s'2) components of a second signal at frequency f2,

means (46', 47', 50) for generating from the in-phase and quadrature components of the first and second signals the in-phase component (s) of a third signal at frequency 1/T, and

means (52) for sampling the in-phase component of the third signal at signal cadence 1/T, and

detection means (71-78) for detecting the time at which the amplitude of the sampled in-phase component decreases significantly.

## Ansprüche

1. Verfahren zum Erkennen der Anfangszeit einer Pseudozufallsfolge von 0° und 180°-Phasenwechsel einer Trägerwelle in einem Datenempfänger, der mit Zweiseitenband-Quadraturmodulation arbeitet, wobei der Pseudozufallsfolge eine Trägerphasenumkehrfolge vorangeht, und die Folgen so gestaltet sind, daß der Anfang der Pseudozufallsfolge eine Phasenumkehr der Komponenten des Frequenzspektrums der Umkehrfolge bewirkt, dadurch gekennzeichnet, daß es folgende Verfahrensschritte einschließt :

a) Filtern des erhaltenen Signals, um daraus ein erstes Signal (s1, s'1) bei der Frequenz f1 zu gewinnen, und ein zweites Signal (s2, s'2) bei der Frequenz f2, wobei die Frequenzen f1 und f2 durch folgende Beziehungen definiert sind :

$$f1 = fc - 1/2T \quad f2 = fc + 1/2T$$

worin

fc die Trägerfrequenz und

1/T die Signalkadenz ist,

b) die Kombination des ersten und zweiten Signals zum Erzeugen eines dritten Signals (S) bei der Frequenz 1/T,

c) das Messen der Energie (E) dieses dritten Signals, und

d) das Feststellen des Zeitpunktes, zu dem diese Energie unter ihren Durchschnittswert sinkt, wobei dieser Zeitpunkt den Anfangszeitpunkt der zweiten Folge angibt.

2. Verfahren nach Anspruch 1, dadurch gekennzeichnet, daß der Energieabfall dieses dritten Signals durch Feststellen des Zeitpunktes, zu dem diese Energie ihren Mindeswert erreicht, erkannt wird.

3. Verfahren zum Erkennen der Anfangszeit einer Pseudozufallsfolge von 0° und 180°-Phasenwechsel einer Trägerwelle in einem Datenempfänger, der mit Zweiseitenband-Quadraturmodulation arbeitet, wobei der Pseudozufallsfolge eine Trägerphasenumkehrfolge vorangeht, und die Folgen so gestaltet sind, daß der Anfang der Pseudozufallsfolge eine Phasenumkehr der Komponenten des Frequenzspektrums der Umkehrfolge bewirkt, dadurch gekennzeichnet, daß es die folgenden Verfahrensschritte einschließt :

a) Filtern des erhaltenen Signals, um daraus ein erstes Signal (s1, s'1) bei der Frequenz f1 zu gewinnen, und ein zweites Signal (s2, s'2) bei der Frequenz f2, wobei die Frequenzen f1 und f2 durch die Beziehungen bestimmt werden :

$$f1 = fc - 1/2T \quad f2 = fc + 1/2T$$

worin

fc die Trägerfrequenz, und

1/T die Signalkadenz ist,

b) die Kombination des ersten und zweiten Signals zum Erzeugen der Inphasenkomponente (s) eines dritten Signals (S) bei der Frequenz 1/T,

c) Abtastung dieser Inphasenkomponente bei der Signalkadenz 1/T, und

d) Feststellen des Zeitpunktes, zu dem die Amplitude dieser abgetasteten Inphasenkomponente wesentlich abnimmt, wobei dieser Zeitpunkt die Anfangszeit dieser zweiten Folge angibt.

4. Verfahren nach Anspruch 3, dadurch gekennzeichnet, daß das Vermindern dieser Amplitude dadurch festgestellt wird, daß der Zeitpunkt erfaßt wird, bei dem diese Amplitude unter einen Teilwert ihres maximalen Wertes sinkt.

5. Vorrichtung zum Ausführen des Verfahrens nach einem der Ansprüche 1 und 2, dadurch gekennzeichnet, daß es einschließt :

ein erstes Filter (40) zur Gewinnung des ersten Signals (s1, s'1) bei der Frequenz f1 aus dem erhaltenen Signal

ein zweites Filter (41) zur Gewinnung eines zweiten Signals (s2, s'2) bei der Frequenz f2 aus dem erhaltenen Signal,

Mittel (46-51) zum Erzeugen eines dritten Signals (S) bei der Frequenz 1/T aus diesem ersten und zweiten Signal,

Mittel (54-56) zum Messen der Energie dieses dritten Signals, und

Erkennungsmittel (58-65) zum Feststellen des Zeitpunktes, zu dem diese Energie unter ihren Durchschnittswert sinkt.

6. Vorrichtung nach Anspruch 5, dadurch gekennzeichnet, daß das erste bzw. zweite Filter die Inphasen- und Quadraturkomponente des ersten und zweiten Signals liefert, und die Mittel zum Erzeugen des dritten Signals die Inphasen- (s) und Quadraturkomponente (s') des dritten Signals aus den Inphasen- und Quadraturkomponenten des ersten und zweiten Signals liefern.

7. Vorrichtung nach Anspruch 6, dadurch gekennzeichet, daß die Meßmittel einschließen:

einen ersten Multiplikator (54) zum Multiplizieren mit sich selbst der Inphasenkomponente des dritten Signals,

einen zweiten Multiplikator (55) zum Multiplizieren mit sich selbst der Quadraturkomponente des dritten Signals, und

Mittel (56) zum Summieren der Ausgangssignale des ersten und zweiten Multiplikators.

8. Vorrichtung zum Druchführen des Verfahrens nach einem der Ansprüche 3 und 4, dadurch gekennzeichnet, daß sie einschließt:

ein erstes Filter (40') zur Gewinnung, aus dem erhaltenen Signal, der Inphasen- (s1) und Quadratur- (s'1) Komponente eines ersten Signals bei der Frequenz f1,

ein zweites Filter (41') zur Gewinnung, aus dem erhaltenen Signal, der Inphasen- (s2) und Quadratur (s'2) Komponente eines zweiten Signals bei der Frequenz f2,

Mittel (46', 47', 50') zum Erzeugen, aus der Inphasen- und Quadraturkomponente des ersten und zweiten Signals, der Inphasenkomponente (s) eines dritten Signals bei der Frequenz 1/T.

Mittel (52) zur Abtastung der Inphasenkomponente des dritten Signals bei der Signalkadenz 1/T, und

Erkennungsmittel (71-78) zum Feststellen des Zeitpunktes, bei dem die Amplitude der entnommenen Inphasenkomponente wesentlich abnimmt.

FIG.2

0 013 343

FIG. 1

FIG. 3

FIG. 4